# EUROPEAN PATENT SPECIFICATION

(11) **EP 3 302 104 B1**
(45) Date of publication and mention of the grant of the patent: **30.09.2020**
(21) Application number: 16804443.6
(22) Date of filing: 02.06.2016
(51) Int. Cl.: A23L 33/15, A23L 29/30, A61K 31/14, A23L 33/125, A23P 10/47, A23L 33/00, A23L 33/10, A23L 33/16

(54) **HYDRATION CONTROL FOR CHOLINE SALTS**
HYDRIERUNGSSTEUERUNG FÜR CHOLINSALZE
RÉGULATION D'HYDRATATION POUR SELS DE CHOLINE

(30) Priority: 04.06.2015 US 201562170945 P
(43) Date of publication of application: 11.04.2018
(73) Proprietor: Balchem Corporation, New Hampton, NY 10958 (US)
(72) Inventor: DULL, Bod, Jay, Akron, OH 44313 (US); PAVLIK, Christopher, Michael, Montgomery, NY 12549 (US); OENGA, Gideon, Nyabuti, Middletown, NY 10940 (US); DIEHL, Thomas, Defiance, OH 43512 (US); WARD, Matthew, Jason, Florida, NY 10921 (US)
(74) Representative: Greaves Brewster LLP
(86) International application number: PCT/US2016/035533
(87) International publication number: WO 2016/196804

(56) References cited:
- EP-A1- 0 537 402
- US-A- 2 879 161
- US-A- 3 356 569
- US-A1- 2004 013 787
- US-A1- 2005 208 179
- US-A1- 2006 083 795
- US-A1- 2012 021 977
- US-A1- 2012 064 220
- US-A1- 2014 093 614
- YATES ET AL.: 'Dietary Reference Intakes: The New Basis for Recommendations for Calcium and Related Nutrients, B Vitamins, and Choline' JOURNAL OF THE AMERICAN DIETETIC ASSOCIATION vol. 98, no. ISSUE, June 1998, pages 699 - 706, XP055333086

## Description

### Field of the Invention

The present disclosure relates to choline salt compositions, and methods of preparing the same, containing choline salt(s), sugar alcohol(s), hexitol sugar derivative(s), alginate(s), phosphate salt(s), and combinations thereof. The compositions are free flowing and compatible with various manufacturing processes.

### Background of the Invention

Choline is a water-soluble essential nutrient. It is grouped within the B-complex vitamins. Choline generally refers to the various quaternary ammonium salts containing the N,N,N-trimethylethanolammonium cation, below, wherein the X denotes a counteranion.

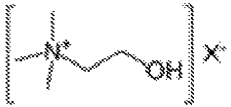

Choline is also a precursor molecule for the neurotransmitter acetylcholine, which is involved in many functions including memory and muscle control. It must be consumed through the diet for the body to remain healthy. It is also used in the synthesis of the constructional components in the body's cell membranes and exhibits unique flavor characteristics which allow it to be used as a partial replacement for other salts. It is expected that choline will be placed in the USRDI as an essential and claimable nutrient with a recommended daily intake, e.g., 550 mg.

It is known that choline salts are inherently hydroscopic. They absorb water from the air and within a short time, e.g., a few hours, can form agglomerates or hard blocks which are difficult to process using manufacturing equipment. The uptake of water by choline salts can produce an opal like crystal which is difficult to breakup and, when in its complete form, is also difficult to hydrate. As choline salt absorbs water, the flowability of the choline salt is negatively impacted and presents significant processing issues.

A variety of different techniques and additives have been combined with nascent, unconditioned choline in an attempt to address these issues. For example, choline has been microencapsulated or blended with silica, vegetable oils, various salts, etc. US3356569 discloses compositions comprising up to 85 wt% choline chloride along with additives such as clay and silica. These techniques or blends either significantly dilutes the choline, adds ingredients which conflict with further processing, use and/or packaging systems, or fails to maintain good flowability of the choline over time.

### Summary of the Invention

The present disclosure relates to choline salt compositions, and methods of preparing the same, containing choline salts, sugar alcohols, alginates, phosphate salts, or combinations thereof. The compositions are free flowing and compatible in various manufacturing processes.

In one embodiment, the present disclosure relates to a composition comprising (i) greater than 90 wt% of a choline salt, (ii) a sugar alcohol or a hexitol sugar derivative, or an alginate; (iii) less than about 1 wt% of water; and (iv) optionally a phosphate salt, wherein the composition is free flowing, wherein the hexitol sugar derivative is selected from the group consisting of 1,4-anhydrosorbitol, 1,5-anhydrosorbitol, 3,6-anhydrosorbitol, 2,5-anhydromannitol, isosorbide (1,4:3,6-dianhydrosorbitol), isomannide (1,4:3,6-dianhydromannitol), isoidide (1,4:3,6-dianhydroiditol) and combinations thereof,
wherein the amount of sugar alcohol, in the composition is less than 5.0 wt%, wherein the amount of hexitol sugar derivative in the composition is less than 5.0 wt%, and wherein the amount of alginate in the composition is less than 5.0 wt%.

In another embodiment, the present disclosure relates to a method comprising (i) providing a choline salt, (ii) combining the choline salt with a sugar alcohol, or a hexitol sugar derivative, or an alginate to form a composition, wherein the composition comprises greater than 90 wt% of the choline salt, contains less than 1 wt% of water and is free flowing, wherein the hexitol sugar derivative is selected from the group consisting of 1,4-anhydrosorbitol, 1,5-anhydrosorbitol, 3,6-anhydrosorbitol, 2,5-anhydromannitol, isosorbide (1,4:3,6-dianhydrosorbitol), isomannide (1,4:3,6-dianhydromannitol), isoidide (1,4: 3,6-dianhydroiditol) and combinations thereof,
wherein the amount of sugar alcohol in the composition is less than 5.0 wt%, wherein the amount of hexitol sugar derivative in the composition is less than 5.0 wt%, and wherein the amount of alginate in the composition is less than 5.0 wt%.

The various embodiments of the present disclosure can produce choline compositions that do not significantly dilute the choline within the composition nor introduce undesirable components to the choline compositions. The compositions of the present disclosure have or maintain the flowability of the dried choline salt(s). By maintaining good flowability of the choline salt(s), the risks to employees is reduced and the compositions are readily usable in subsequent downstream blends and processes. Also, the components of the composition of the present disclosure generally regarded as safe (GRAS).

### Detailed Description of the Invention

The present disclosure relates to choline salt compositions, and methods of preparing the same, containing choline salts, sugar alcohols, hexitol sugar derivatives, alginates, phosphate salts, or combinations thereof. The compositions are free flowing and compatible in various manufacturing processes.

In one embodiment, the present disclosure relates to a composition comprising: (i) greater than 90 wt% of a choline salt, (ii) a sugar alcohol or a hexitol sugar derivative, and (iii) less than 1 wt% of water, wherein the composition is free flowing, wherein the amount of sugar alcohol in the composition is less than 5.0 wt% and wherein the amount of hexitol sugar derivative in the composition is less than 5.0 wt%.

The choline salt, also referred to herein as choline, can be any suitable choline salt useful in a dried or dry form. In particular, the choline salt can be selected from the group consisting of choline chloride, choline bitartrate, choline hydroxide, choline citrate and choline carbonate. In particular, the choline salt can be choline chloride or choline bitartrate. The choline compositions can also contain a blend of one or more choline salts, such as a mixture of choline chloride and choline bitartrate.

The compositions of the present disclosure contain a relatively high amount of choline such that the choline content is not significantly diluted by the other components. For example, the amount of choline salt or salts in the composition is greater than 90, 91, 92, 93, 94, 95, 95.5, 96, 96.5, 97, 97.1, 97.2, 97.25, 97.3, 97.4, 97.5, 97.6, 97.7,97.75, 97.8, 97.9, 98, 98.1, 98.2, 98.25, 98.3, 98.4, 98.5, 98.6, 98.7, 98.75, 98.8, 98.9, 99,99.1, 99.2, 99.25, 99.3, 99.4 or 99.5 wt%. These values can also be used to define a range, such as from about 98.75 to about 99.75 wt%, or 97.5 to about 99.5 wt%. The other components can be selected from those that do not negatively impact manufacturing or processing of the composition, that are generally regarded as safe, or both.

In some embodiments, the compositions of the present disclosure can be formulated without silicon oxides, e.g., SiO₂, which can be ineffective to improve flowability and can have regulatory issues. The compositions can also be formulated without vegetable oils, which can also be ineffective, can contain hydrogenated lipids and can also have regulatory issues. Finally, in some embodiments, the compositions can be formulated without phosphates. Ingestion of large amounts of phosphates can cause kidney damage and may adversely affect the absorption of other minerals.

The sugar alcohol can be any polyol, such as a hexitol, a tetritol and a pentitol sugar, that can be combined with a choline salt in a composition that is free flowing and compatible with manufacturing processes.

The hexitol sugars can be any of the hexahydroxy alcohols, e.g., HOCH₂(CHOH)₄CH₂OH. The hexitol sugar can be selected from the group consisting of mannitol, sorbitol, inositol and combinations thereof. In particular, the hexitol sugar can be mannitol.

Derivatives of hexitol sugars include mono and di-anhydro sugars. These derivatives can be produced via the elimination of one or two molecules of water from hexitols, e.g. mannitol, sorbitol, and iditol. The hexitol sugar derivative is selected from the group consisting of 1,4-anhydrosorbitol, 1 ,5-anhydrosorbitol, 3,6-anhydrosorbitol, 2,5 - anhydromannitol, isosorbide (1,4:3,6-dianhydrosorbitol), isomannide (1,4:3,6-dianhydromannitol), isoidide (1,4:3,6-dianhydroiditol) and combinations thereof. The choline compositions can also contain a blend of one or more sugar alcohols, or hexitol sugar derivatives, such as a mixture of mannitol and sorbitol.

The tetritol sugars can be any of the tetrahydroxy alcohols, e.g., HOCH₂(CHOH)₂CH₂OH. The tetritol sugar can be threitol or erythritol.

The pentitol sugars can be any of the pentahydroxy alcohols, e.g., HOCH₂(CHOH)₃CH₂OH. The pentitol sugar can be xylitol.

Additional examples of the polyols according to the present disclosure can include adonitol, arabitol and dulcitol.

In some embodiments, the sugar alcohol, e.g., mannitol, do not induce gastric distress or exhibit hydroscopic tendencies. The sugar alcohol, e.g., mannitol, can act as a nucleation site for fine particle choline salts, such as choline chloride, to transition into larger, more stable particles which can be one of the reasons it can generate compositions having increased stability, flowability, and shelf-life enhancement. The average particle size of the fine particle choline salt used in the composition can be less than about 1,000, 900, 800, 700, 600, 500, 400, 300, 200 or 100 microns. These values can also be used to define a range, such as from about 900 to about 700 microns.

The amount of sugar alcohol, or hexitol sugar derivative, in the composition can vary based on the desired use and characteristics of the choline composition. The amount of sugar alcohol(s), or hexitol sugar derivative(s), thereof in the composition is less than 5.0, 4.5, 4.0, 3.5, 3.0, 2.5, 2.0, 1.5, 1.4, 1.3, 1.2, 1.1, 1.0, 0.9, 0.8, 0.75, 0.7, 0.6, 0.5, 0.4, 0.3, 0.25, 0.2 or 0.1 wt%. These values can also be used to define a range, such as from about 0.25 to about 0.75 wt%, or about 0.5 to about 1.0 wt%.

To achieve or maintain good flowability, the composition can contain little to substantially no water. The amount of water in the composition is less than 1.0, 0.9, 0.8, 0.7, 0.6, 0.5, 0.4, 0.3, 0.2 or 0.1 wt%. These values can also be used to define a range, such as from about 0.2 to about 0.5 wt%. The composition can maintain good flowability for a relatively long time upon storage and during manufacturing. The length of time the composition maintains good flowability can be up to about 1, 2, 3, 4, 5, 6, 7, 8, 9, 10, 11, 12, 18, 24, or 36 months during storage. These values can be used to define a range, such as from about 1 to about 12 months. The storage conditions can be typical warehouse conditions, low humidity storage conditions, or standard stability conditions, e.g., 40 °C / 75% RH. The length of time the composition maintains good flowability can be up to about 0.5. 1, 2, 3, 4, 5, 6, 7, 8, 9, 10, 11 or 12 hours during manufacturing. These values can be used to define a range, such as from about 0.5 and 6 hours.

The composition of the present disclosure can have sufficient flowability to be useful in manufacturing process without exhibiting significant agglomeration or sticking to the equipment. The composition can freely flow or spill out of the container or funnel flow under gravity, whereas a composition having poor flowability can adhere to walls and equipment surfaces.

The flowability of the composition can be measured using various techniques, including the Jenike shear index, the Hausner Ratio, the Carr Index, and the static and dynamic angles of repose. Flowability can also be measured by the energy consumption for powder movement of the powder product. The flowability can be measured with a Powder Rheometer System FT4 (Freeman Technology Ltd., UK) and is specified in kJ/t.

The flow of the composition can also be characterized using a FLODEX™ Powder Flowability Index Test Instrument (Hanson Research Corporation, Chatsworth, Calif.). The instrument measures the amount of material that passes through an orifice while free flowing under the force of gravity. Prior to flow testing, the orifice is blocked. Material is then placed over the blocked orifice. When the orifice is unblocked, the material can flow through the orifice under the force of gravity if the orifice diameter is sufficiently large. Material that flows through small orifices is considered to have flow properties useful for pharmaceutical manufacturing, such as tableting. For example, the compositions of the present disclosure can have a Flodex measurement (Flodex) of less than about 30, 29, 28, 27, 26, 25, 24, 23, 22, 21, 20, 19, 18, 17, 16, 15, 14, 13, 12, 11 or 10 mm. These values can be used to define a range, such as from about 20 to about 30 mm. Compositions having such values can be used in high-speed tableting operations at commercial scale.

The compositions of the present disclosure can maintain the flowability of the nascent, unconditioned, raw, or otherwise free flowing choline salt used to prepare the compositions. The compositions can maintain at least about 99% of the flowability of the choline salt used to make the composition. In other embodiments, the compositions can maintain at least about 98%, 95%, 90%, 85%, 80%, 75%, 70%, 60% or 50% of the flowability of the choline salt used to make the composition. These values can also be used to define a range, such as about 90% to about 75%. The flowability can be maintained at least about 24 hours, 2 days, 3, 4, 5, 6, 7, 8, 9, 10, 14 or 21 days. These values can also be used to define a range.

In particular, one embodiment of the present disclosure is a composition having about 98.75 to about 99.75 wt% choline chloride, about 0.25 to about 1.25 wt% mannitol, less than 1 % of water, and wherein the composition is free flowing.

The compositions of the present disclosure can also contain a phosphate salt. Without wishing to be bound, it is believed that the inclusion of one or more phosphate salts can control water migration within choline compositions. The phosphate salt can be selected from the group consisting of monobasic calcium phosphate, dibasic calcium phosphate, tribasic calcium phosphate, and combinations thereof. In particular, the phosphate salt can be dibasic calcium phosphate. The compositions can also contain a blend of one or more phosphate salts.

In some embodiments, the phosphate salt is not a sodium based phosphate salt. Some sodium based phosphate salts can be ineffective as flow/stability agents.

The amount of phosphate salt(s) in the composition can vary based on the desired use and characteristics of the choline composition. The amount of phosphate salt(s) in the composition can be less than about 5.0, 4.5, 4.0, 3.5, 3.0, 2.5, 2.0, 1.5, 1.4, 1.3, 1.2, 1.1, 1.0, 0.9, 0.8, 0.75, 0.7, 0.6, 0.5, 0.4, 0.3, 0.25, 0.2 or 0.1 wt%. These values can also be used to define a range, such as from about 0.25 to about 0.75 wt%, or about 0.5 to about 1.0 wt%.

In particular, one embodiment of the present disclosure is a composition having about 97.5 to about 99.5 wt% choline chloride, about 0.25 to about 1.25 wt% mannitol, about 0.25 to about 1.25 wt% dibasic calcium phosphate, and less than 1% of water, wherein the composition is free flowing.

In another embodiment, the present disclosure relates to a composition comprising: (i) greater than 90 wt% of a choline salt, (ii) an alginate, and (iii) less than 1 wt% of water, wherein the composition is free flowing, and wherein the amount of alginate in the composition is less than 5.0 wt%.

The alginate can be any salts of alginic acid and modified alginates. Alginic acid, which is isolated from seaweed, is a polyuronic acid made up of two uronic acids: D-mannuronic acid and L-guluronic acid. The ratio of mannuronic acid and guluronic acid varies with factors such as seaweed species, plant age and part of the seaweed (e.g., stem, leaf). Alginic acid is substantially insoluble in water. A thermo-irreversible water-insoluble alginate gel can be formed in the presence of a gel-forming ion, such as polyvalent cations (e.g., calcium, magnesium, chromium, barium, strontium, zinc, copper (⁺²), aluminum, and mixtures thereof) at appropriate concentrations. In the presence of calcium, a calcium alginate gel can be formed when the calcium ions, in the calcium chloride, react with the alginate as the calcium ion diffuse into the mix containing alginate.

Without wishing to be bound, it is believed that alginates build strong, hydrated structures of films or gels around choline and establish an equilibrium between the outside environment and the microenvironment within the film or gel that provides stability to the choline entrained within. The use of alginates help the choline maintain good flowability by, for example, preventing or reducing clumping, settling, hardening or combinations thereof. It is also believed that the addition of a phosphate, such as calcium phosphate, can strengthen the alginate film or gel. Upon exposure to excess moisture, however, the equilibrium can be overcome, the micro film or gel can rupture and the choline can become fully hydrated and aggregate or liquefied.

In particular, the alginate can be a metal alginate, e.g., sodium alginate, or alginic acid.

The amount of alginate, or salt thereof, in the composition can vary based on the desired use and characteristics of the choline composition. The amount of alginate, or salt thereof, in the composition is less than 5.0, 4.5, 4.0, 3.5, 3.0, 2.5, 2.0, 1.5, 1.4, 1.3, 1.2, 1.1, 1.0, 0.9, 0.8, 0.75, 0.7, 0.6, 0.5, 0.4, 0.3, 0.25, 0.2 or 0.1 wt%. These values can also be used to define a range, such as from about 0.25 to about 0.75 wt%, or about 0.5 to about 1.0 wt%.

In particular, a composition having a choline salt, an alginate, and less than 1 wt% of water, wherein the composition is free flowing can also contain a phosphate salt. In another embodiment, the present disclosure can be a composition having about 97.5 to about 99.5 wt% choline chloride, about 0.25 to about 1.25 wt% sodium alginate, about 0.25 to about 1.25 wt% dibasic calcium phosphate, and less than 1% of water, wherein the composition is free flowing.

The present disclosure relates to methods of preparing choline salt compositions containing choline salts, sugar alcohols, alginates, phosphate salts, or combinations thereof to reduce water uptake, to maintain flowability and good processing of the choline composition, or combinations thereof. The compositions are free flowing and compatible in manufacturing processes. The methods can address or control the hydroscopicity of the choline salts. In one embodiment, the present disclosure relates to a method comprising (i) providing a choline salt, as described above, (ii) combining the choline salt with a sugar alcohol or a hexitol sugar derivative, or an alginate, to form a composition, wherein the composition comprises greater than 90 wt% of the choline salt, contains less than 1 wt% of water and is free flowing, wherein the amount of sugar alcohol, in the composition is less than 5.0 wt%, wherein the amount of hexitol sugar derivative in the composition is less than 5.0 wt%, and wherein the amount of alginate in the composition is less than 5.0 wt%.

The choline salt can be combined with the other materials in any known way of combining components to form a flowable material. The choline salt and the other materials can be dry mixed, blended, rotary vacuum, or spray-dried together. The composition can be prepared using any combination of dry blending, slurry formation, and liquid based drying. For example, the precipitated choline salt compositions can also be centrifuged and microwaved dry. In particular, the choline salt and the other material, such as the hexitol sugar or the alginate, can be spray-dried to form a spray-dried combination of, for example, choline and hexitol sugar or choline and alginate.

Differences between spray-dry materials and dry blended materials of the present disclosure can include the following. Spray-dried materials can have a very fine particle size, e.g., less than about 600 microns, with extremely low moisture content, e.g., less than about 0.1%, and excellent flowability. Dry blended materials can have a higher moisture content, e.g., 1.0-2.0%, and can have a larger particle size, e.g., greater than about 1200 microns.

In some embodiments, the spray-dried compositions can be formed using temperatures greater than about 180 degrees Celsius. Due to the corrosive nature of choline, the metal components within the spray-dry system can be protected by barriers, regular cleaning, etc. to limited the effects of the choline on the metal equipment, such as on the spray heads and needles.

The method can further include combining a phosphate salt to the composition. The choline salt or the choline salt mixture with other materials, e.g., hexitol sugar, can be dry mixed, blended, rotary vacuum, or spray-dried together with the phosphate salt. In particular, the phosphate salt is dry blended with the choline salt or choline salt combination with other materials. In one embodiment, the choline salt and the hexitol sugar are first combined by spray-drying and the phosphate salt is thereafter combined to the mixture by dry blending.

When an amount, concentration, or other value or parameter is given as either a range, preferred range, or a list of upper preferable values and lower preferable values, this is to be understood as specifically disclosing all ranges formed from any pair of any upper range limit or preferred value and any lower range limit or preferred value, regardless of whether ranges are separately disclosed.

The present invention is further defined in the following Examples. It should be understood that these Examples, while indicating preferred embodiments of the invention, are given by way of illustration only.

### Examples

### Example 1-General Procedure

Unconditioned-crystal choline chloride (50 g) was obtained from BalchemCorpVerona, and either mixed with additives (dry blends) in the range of 0.5% to 1.0% (0.25-0.50 g), co-dried, or spray-dried. The dry blends were placed in polycarbonate bottles (high permeability to oxygen and water) and observed daily for flow characteristics, agglomeration, and water uptake at ambient temperature and humidity. The co-dried mixtures prepared using a Rotovap (Buchi) were first dissolved in water was vacuum-dried gently for several hours, recovered and placed in the polycarbonate bottles. Spray-dried samples prepared using a Mini-Spray Dryer (Buchi) were dissolved in water at 50% total dissolved solids (TOS), spray-dried and placed in the polycarbonate bottles.

Samples were evaluated for flowability, level of agglomeration, and water uptake relative to choline chloride (no additive).

Long-term flowability and scoop-ability are based up a container/closure system which limits water vapor transmission. Flowability and scoop-ability were measured in reference to choline chloride without an additive. The raw material before exposure to moisture and / or used to prepare composition is free flowing. This material can become agglomerated and hardens significantly within 24 hours. Any prevention of this hardened/agglomerate state past 24 hours is an improvement. Scoop-ability is the ability to scoop/pour the product from a drum/bag.

As part of the evaluation of flowability, the compression/robustness of the composition was also tested. One of the issues with current choline chloride products is the poor long-term shelf life, specifically the product's irreversible transition to large, brick-like agglomerates within its packaging. To evaluate the usefulness of the compositions of the present disclosure a compression/robustness test was performed. The test involves placing the compositions in a vacuum bag and heat sealing it, followed by sustained application of 50 lbs of compressive force to simulate the typical forces a drum of product would experience. Each composition was then evaluated on how much time was required for conversion to firm, irreversible aggregates, recovery of flowability (i.e., can flowability be recovered with minimal applied force). In one aspect, the compositions of the present disclosure encourage the formation of uniform, micro-particles which can be conductive in generating a high flowability solid.

A texture analyzer, e.g., a Penetrometer, was used to evaluate the hardness of the additive blends. The hardness of the compositions correlated with the decreased flowability. An increased hardness is consistent with decrease flowability and increase agglomeration. Agglomeration was tested by visual inspection.

Water uptake was evaluated via mass of accumulated water (in grams) over time within a polycarbonate bottle with a non-lined closure lid.

### Example 2 - Choline Chloride, Mannitol and/or and Dibasic Calcium Phosphate Compositions

Compositions having choline chloride and mannitol were prepared. Compositions containing 0.5 - 1.0 wt% mannitol were prepared by spraying drying and by heated rotary-vacuum drying (or Freeze Dry). Compositions containing more than 1.0 - 2.0 wt% were prepared by dry blending. All blending/drying techniques exhibited good flowability, minimal aggregation, and low water uptake compared to compositions comprising choline chloride alone. See Table 1. Compositions having choline chloride and mannitol performed best when the dried choline chloride contained the least amount of water. The compositions can be mixed with other components and retains its flowability and processability. When Vitamin B12 was added (at 100% ROI relative to 100% ROI of choline) to the predried/blended choline chloride/mannitol and the mixtures dried, no negative effects were observed to flowability, agglomeration, or water-uptake.

**Table 1: Choline and Mannitol compositions.**

| Composition | Choline Chloride wt% | Mannitol wt% | Time to Reduced Flowability |
|---|---|---|---|
| Dry Blend | 100% | - | 24 hours |
| Dry Blend | 98% | 2% | 150 days |
| Dry Blend | 99% | 1% | 150 days |
| Freeze Dry | 99% | 1% | 210 days + |
| Freeze Dry | 99.5% | 0.5% | 180 days + |
| Spray-Dry | 100% | - | < 5 minutes |
| Spray-Dry | 99% | 1% | 145 days + |

| | | | |
|---|---|---|---|
| "+" indicates blend remained stable with excellent flowability, testing remains in progress | | | |

Compositions having choline chloride, mannitol and dibasic calcium phosphate were also prepared. Compositions containing 0.5 - 1.0 wt% mannitol and 0.5 - 1.0 wt% dibasic calcium phosphate were prepared by spraying drying, heated rotary-vacuum drying (or Freeze Dry) and dry blending. All blending/drying techniques containing mannitol exhibited good flowability, minimal aggregation, and low water uptake compared to compositions comprising choline chloride alone. See Table 2. The time to reduced flowability measure the time it takes for the composition to stop being free flowing.

**Table 2: Choline, Mannitol and Dibasic Calcium Phosphate compositions.**

| Composition | Choline Chloride wt% | Mannitol wt% | Calcium Phosphate wt% | Time to Reduced Flowability |
|---|---|---|---|---|
| Dry Blend | 100% | - | - | 24 hours |
| Dry Blend | 99% | 1% | 1% | 190 days |
| Dry Blend | 99% | 0.5% | 0.5% | 176 days |
| Freeze Dry | 98% | 1% | 1% | 210 days + |
| Freeze Dry | 99% | 0.5% | 0.5% | 210 days + |
| Spray-Dry | 100% | - | - | < 5 minutes |
| Spray-Dry | 99% | 0.5% | 0.5%* | 170 days |
| Spray-Dry | 99% | 1% | - | 180 days |
| Spray-Dry** | 99% | 1% | - | 210 days + |

| | | | | |
|---|---|---|---|---|
| "+" indicates blend remained stable with excellent flowability, testing remains in progress * indicates additional post spray-drying ** indicates composition was further blended with B-Vitamin | | | | |

Spray-drying was performed using a two-step process due to the low solubility of dibasic calcium phosphate in water. Mannitol and choline chloride are spray-dried together and calcium phosphate was blended into the mix post-drying. Of the spray-dried samples, this blend composition demonstrated good characteristics both in flowability and minimal aggregation. It is believed a synergist relationship exists between mannitol and dibasic calcium phosphate when combined by first spray-drying the choline salt with the mannitol and then blending with the dibasic calcium phosphate. For example, a 0.5 wt% mannitol (spray-dried) and 0.5 wt% dibasic calcium phosphate (blended) can produce optimal results for some compositions. After 145 days the samples exhibited no observable difference from their immediate post-dried state

Spray-drying of choline chloride when present in high weight percentage is difficult because of the chemical properties associated with choline-salts. Choline chloride is deliquescent, having a high affinity for moisture absorption, which can trigger a transition into an agglomerate solid and inevitably a liquid state. Previous attempts have been made to reduce or minimize moisture uptake by microencapsulation, treatment with silica, or long-chain fatty acids such as magnesium stearate. These additives showed some success in non-spray-dried applications exhibit no benefit and even some negative effects when used in a spray-dried formulation of choline chloride when present in high weight percentage. Typical spray-drying issues involve semi-solid agglomeration on dryer walls, nozzle clogging, low yields (due to poor drying, and reliquidification), and difficult clean-up. Choline chloride blends consisting of mannitol blends less than 10%, in particular less than 2%, more particular less than 1.0%, have been shown to suppress and/or silence many of these poor characteristics. The enhancement observed from a physical and chemical standpoint is believed to correlated to a better performing spray-dried formulation. With the addition of mannitol, choline chloride has displayed the ability to be spray-dried directly without the need for dilution within a sub-blend.

Two choline products were successfully spray-dried in a pilot plant. The first test variable was with 10% mannitol and 90% choline chloride at 50% TS (total solids). There were no issues with mixing and the mix was sent to the dryer at 160 °F. Within the first 5 min of drying the manometer read past 10 indicating no air flow and the run was stopped. It was suspected that free mannitol plugged up the bags. Before the next run the bags were washed and dried. The second test variable was with 1% mannitol and 99% choline chloride at 50% TS. Again, there were no issues with mixing so the mix was sent to the dryer at 160 °F. This product dried much better than the previous test. After drying the chamber was observed to have a thin coating of material but no significant build up. Dryer settings and moisture results are shown in Table 3 for the second run. Testing were performed on spray-dried material which was consistent with industrial standards, which include moisture, water activity, loose and true density, and Porosity. This formulation exhibited low dryer-wall adhesion, decreased water activity and % moisture (versus choline chloride alone; 0.10% vs 0.16%, and 0.2059 vs 0.2074, respectively), and increased final yield.

**Table 3: Spray-Dried Conditions and Associated Data**

| **Spray-Dried Conditions** | | |
|---|---|---|
| Component | Spray- Dried | Comments |
| Fan | 85% | |
| Inlet | 368 °F | |
| Outlet | ∼ 250 °F | |
| HPP | 13% | |
| HPP psi | 1100 | |
| Baghouse DP | 0.4 - 2.4 | Low DP from loose bag |
| Run Time | 1.5 hours | |
| TS | 50% | Theoretical Value |

| **Spray-Dried Production Testing** | | |
|---|---|---|
| Moisture | 0.16,0.10 % | Computrac MAX 4000 Moisture Analyzer (Arizona Inst. LLC) |
| Aw | 0.2059, 0.2074 (24.9 °C) | Aqua Lab 4TE (Decagon Devices) |
| Loose Density | 0.35 g/cc | Loose Density of CCL: 0.40 g/cc |
| True Density | 1.266 g/cc | True Density of CCL: 1.249 g/cc |
| Porosity | 0.724 | Porosity of CCL: 0.68 |

### Example 3 - Choline Bitartrate, Mannitol and Dibasic Calcium Phosphate compositions

Compositions having choline bitartrate, mannitol and dibasic calcium phosphate were also prepared. Compositions containing 0.5 - 1.0 wt% mannitol and 0.5 - 1.0 wt% dibasic calcium phosphate were prepared by dry blending. All blended compositions exhibited better flowability, minimal aggregation, and low water uptake compared to compositions comprising choline bitartrate alone. See Table 4. While the choline bitartrate control showed good results initially, the long term flowability and other properties were enhanced by the compositions of the present disclosure.

**Table 4: Choline, Mannitol and Dibasic Calcium Phosphate compositions.**

| Composition | Choline Bitartrate wt% | Mannitol wt% | Calcium Phosphate wt% | Time to Reduced Flowability |
|---|---|---|---|---|
| Dry Blend | 100% | - | - | 100 days |
| Dry Blend | 99% | 1% | - | 160 days + |
| Dry Blend | 99% | - | 1% | 160 days + |
| Dry Blend | 99% | 0.5% | 0.5% | 160 days + |

| | | | | |
|---|---|---|---|---|
| "+" indicates blend remain stable with excellent flowability, testing remains in progress | | | | |

**Example 4 - Choline Chloride, Alginate and Dibasic Calcium Phosphate Compositions**

Compositions having choline chloride, the hydrocolloid alginate (e.g., sodium alginate) and dibasic calcium phosphate were prepared. Compositions containing 0.5 - 1.0 wt% alginate and 0.25 - 1.0 wt% dibasic calcium phosphate were prepared by dry blending. Without wising to be bound, it is believed that alginate interacts with choline, absorbing its hydration to form an *in situ* gel-encapsulate. Alginate itself performs best at levels greater than about 0.5%, 1.0%, or about 2%. When combined with calcium phosphate, the gel-encapsulate can be fortified and alginate at levels less than 1% can be used. The choline chloride was first dry blended with 0.5-1.0% sodium alginate until a uniform distribution was achieved followed by subsequent dry blending with 0.25-1.0% calcium phosphate. All blending/drying techniques having both alginate and calcium phosphate exhibited good flowability, minimal aggregation, and low water uptake for a short time (∼ 30 days) compared to the control. See Table 5. Higher levels of both alginate and calcium phosphate yielded better initial stability.

**Table 5: Choline, Alginate and Dibasic Calcium Phosphate compositions.**

| Composition | Choline Chloride wt% | Alginate wt% | Calcium Phosphate wt% | Time to Reduced Flowability |
|---|---|---|---|---|
| Dry Blend | 100% | - | - | 24 hours |
| Dry Blend | 99% | 1% | - | 24 hours |
| Dry Blend | 98% | 1% | 1% | 32 days |
| Dry Blend | 99% | 0.5% | 0.5% | 30 days |

### Example 5 - Choline Chloride and Dibasic Calcium Phosphate Compositions

Compositions having choline chloride and dibasic calcium phosphate were prepared. Compositions containing 0.5 - 1.0 wt% dibasic calcium phosphate were prepared by both dry blending and rotary-vacuum. Both blending/vacuum techniques containing calcium phosphate exhibited good flowability, minimal aggregation, and low water uptake compared compositions comprising choline chloride alone. See Table 6. Preparation by spray-drying is limited to post spray-dried addition because dibasic calcium phosphate has limited solubility in water.

**Table 6: Choline and Dibasic Calcium Phosphate compositions.**

| Composition | Choline Chloride wt% | Calcium Phosphate wt% | Time to Reduced Flowability |
|---|---|---|---|
| Dry Blend | 100% | - | 24 hours |
| Dry Blend | 98% | 2% | 210 days + |
| Dry Blend | 99% | 1% | 180 days |
| Dry Blend | 99.5% | 0.5% | 165 days |
| Freeze Dry | 99% | 1% | 210 days |
| Freeze Dry | 99.5% | 0.5% | 160 days |
| Spray-Dry | 100% | - | < 5 minutes?? |
| Spray-Dry | 99% | 1%* | 100 days |

| | | | |
|---|---|---|---|
| "+" indicates blend remain stable with excellent flowability, testing remains in progress * indicates additional post spray-drying | | | |

### Example 6 - Baby Formula composition with Choline Chloride

Spray-dried blends of choline chloride and mannitol were prepared with and without Vitamin B 12/Vitamin B and tested for robustness and compression stability when blended into a powdered infant formula. The level of choline added to the infant formula exceeded 200% of the recommended RDI. Choline chloride with no additive was used as the experimental control. Testing involved generating blends of choline chloride with mannitol, heat sealing them within vacuum-bags, followed by sustained application of 50 lbs of compressive force. All three compositions with mannitol showed negligible effects from the compressive force and with minimal applied effect able to return to a free-flowing powder. Choline chloride (no additive / control), however, had a much different result and the powder became hardened, with considerable aggregation after a few days of compression. The addition of RDI amounts of Vitamin B12 or Vitamin B has shown to not compromise the effectiveness of the compositions of the present disclosure.

**Table 7: Baby Formula compositions.**

| Composition | Choline Chloride wt% | Mannitol wt% | Vit B12 / Vit B-Complex wt% | Time to Reduced Flowability |
|---|---|---|---|---|
| Spray-Dry | 100% | - | no | 10 days |
| Spray-Dry | 99% | 1% | yes (Vitamin B12) | 160 days + |
| Spray-Dry | 99% | 1% | yes (Vit B-Complex) | 160 days + |
| Spray-Dry | 99% | 1% | no | 160 days + |

| | | | | |
|---|---|---|---|---|
| "+" indicates blend remain stable with excellent flowability, testing remains in progress | | | | |

## Claims

1. A composition comprising: (i) greater than 90 wt% of a choline salt; (ii) a sugar alcohol or a hexitol sugar derivative, or an alginate; (iii) less than 1 wt % of water; and (iv) optionally a phosphate salt, wherein the composition is free flowing,
wherein the hexitol sugar derivative is selected from the group consisting of 1,4-anhydrosorbitol, 1,5-anhydrosorbitol, 3,6-anhydrosorbitol, 2,5-anhydromannitol, isosorbide (1,4:3,6-dianhydrosorbitol), isomannide (1,4:3,6-dianhydromannitol), isoidide (1,4:3,6-dianhydroiditol) and combinations thereof,
wherein the amount of sugar alcohol in the composition is less than 5.0 wt%, wherein the amount of hexitol sugar derivative in the composition is less than 5.0 wt% and wherein the amount of alginate in the composition is less than 5.0 wt%.

2. The composition of claim 1, wherein the composition comprises greater than about 95 wt % choline salt.

3. The composition of claim 1 or claim 2, wherein the choline salt is selected from the group consisting of choline chloride, choline bitartrate, choline hydroxide, choline citrate and choline carbonate.

4. The composition of claim 1, wherein the sugar alcohol is selected from the group consisting of a hexitol, a tetritol, a pentitol, and combinations thereof.

5. The composition of claim 1, wherein (a) the sugar alcohol is a hexitol sugar and is selected from the group consisting of mannitol, sorbitol and inositol; (b) the sugar alcohol is a tetritol sugar and is selected from the group consisting of threitol and erythritol; or (c) the sugar alcohol is a pentitol sugar and is xylitol.

6. The composition of claim 1, wherein the composition comprises less than 0.5 wt % of water.

7. The composition of claim 1, wherein the choline salt and sugar alcohol are spray-dried together.

8. The composition of claim 1, comprising: (i) 98.75 to 99.75 wt % choline chloride; (ii) 0.25 to 1.25 wt % mannitol; and (iii) less than 1% of water, wherein the composition is free flowing.

9. The composition of claim 1, wherein:
the composition comprises less than 5 wt % phosphate salt;
the phosphate salt is dibasic calcium phosphate;
the choline salt and sugar alcohol are spray-dried together and the phosphate salt is dry blended with the spray-dried choline salt and sugar alcohol; or
the composition comprises (i) 97.5 to 99.5 wt % choline chloride; (ii) 0.25 to 1.25 wt % mannitol; (iii) 0.25 to 1.25 wt % dibasic calcium phosphate; and (iv) less than 1% of water, wherein the composition is free flowing.

10. The composition of claim 1, wherein the alginate is sodium alginate.

11. A method, comprising (i) providing a choline salt; (ii) combining the choline salt with a sugar alcohol or a hexitol sugar derivative, or an alginate to form a composition, wherein the composition comprises greater than 90 wt% of the choline salt, contains less than 1 wt % of water and is free flowing,
wherein the hexitol sugar derivative is selected from the group consisting of 1,4-anhydrosorbitol, 1,5-anhydrosorbitol, 3,6-anhydrosorbitol, 2,5-anhydromannitol, isosorbide (1,4:3,6-dianhydrosorbitol), isomannide (1,4:3,6-dianhydromannitol), isoidide (1,4:3,6-dianhydroiditol) and combinations thereof, wherein the amount of sugar alcohol in the composition is less than 5.0 wt%, wherein the amount of hexitol sugar derivative in the composition is less than 5.0 wt% and wherein the amount of alginate in the composition is less than 5.0 wt%.

12. The method of claim 11, wherein the components are combined via spray-drying, rotary vacuum or dry blending.

13. The method of claim 11 or claim 12, further comprising combining a phosphate salt to the composition.

14. The method of claim 13, wherein the choline salt and the sugar alcohol are combined by spray-drying and the phosphate salt is combined by dry blending.

## Patentansprüche

1. Zusammensetzung, umfassend:
(i) mehr als 90 Gew.-% eines Cholinsalzes,
(ii) einen Zuckeralkohol oder ein Hexitzucker-Derivat oder ein Alginat,
(iii) weniger als 1 Gew.-% Wasser und
(iv) optional ein Phosphatsalz,
wobei die Zusammensetzung frei fließend ist, wobei das Hexitzucker-Derivat ausgewählt ist aus der Gruppe, bestehend aus 1,4-Anhydrosorbit, 1,5-Anhydrosorbit, 3,6-Anhydrosorbit, 2,5-Anhydromannit, Isosorbid (1,4:3,6-Dianhydrosorbit), Isomannid (1,4:3,6-Dianhydromannit), Isoidid (1,4:3,6-Dianhydroidit) und Kombinationen derselben, wobei die Menge an Zuckeralkohol in der Zusammensetzung geringer ist als 5,0 Gew.-%, wobei die Menge an Hexitzucker-Derivat in der Zusammensetzung geringer ist als 5,0 Gew.-% und wobei die Menge an Alginat in der Zusammensetzung geringer ist als 5,0 Gew.-%.

2. Zusammensetzung nach Anspruch 1, wobei die Zusammensetzung mehr als etwa 95 Gew.-% Cholinsalz umfasst.

3. Zusammensetzung nach Anspruch 1 oder Anspruch 2, wobei das Cholinsalz ausgewählt ist aus der Gruppe, bestehend aus Cholinchlorid, Cholinbitartrat, Cholinhydroxid, Cholincitrat und Cholincarbonat.

4. Zusammensetzung nach Anspruch 1, wobei der Zuckeralkohol ausgewählt ist aus der Gruppe, bestehend aus einem Hexit, einem Tetrit, einem Pentit und Kombinationen derselben.

5. Zusammensetzung nach Anspruch 1, wobei
(a) der Zuckeralkohol ein Hexitzucker und ausgewählt ist aus der Gruppe, bestehend aus Mannit, Sorbit und Inosit,
(b) der Zuckeralkohol ein Tetritzucker und ausgewählt ist aus der Gruppe, bestehend aus Threit und Erythrit, oder
(c) der Zuckeralkohol ein Pentitzucker und Xylit ist.

6. Zusammensetzung nach Anspruch 1, wobei der Zusammensetzung weniger als 0,5 Gew.-% Wasser umfasst.

7. Zusammensetzung nach Anspruch 1, wobei das Cholinsalz und der Zuckeralkohol zusammen sprühgetrocknet sind.

8. Zusammensetzung nach Anspruch 1, umfassend:
(i) 98,75 bis 99,75 Gew.-% Cholinchlorid,
(ii) 0,25 bis 1,25 Gew.-% Mannit und
(iii) weniger als 1% Wasser, wobei der Zusammensetzung frei fließend ist.

9. Zusammensetzung nach Anspruch 1, wobei die Zusammensetzung weniger als 5 Gew.-% Phosphatsalz umfasst, wobei das Phosphatsalz zweibasisches Calciumphosphat ist, das Cholinsalz und der Zuckeralkohol zusammen sprühgetrocknet sind und das Phosphatsalz mit dem sprühgetrockneten Cholinsalz und dem Zuckeralkohol trocken gemischt ist, oder die Zusammensetzung umfasst
(i) 97,5 bis 99,5 Gew.-% Cholinchlorid,
(ii) 0,25 bis 1,25 Gew.-% Mannit,
(iii) 0,25 bis 1,25 Gew.-% zweibasisches Calciumphosphat und
(iv) weniger als 1% Wasser, wobei der Zusammensetzung frei fließend ist.

10. Zusammensetzung nach Anspruch 1, wobei das Alginat Natriumalginat ist.

11. Verfahren, umfassend
(i) Bereitstellen eines Cholinsalzes,
(ii) Kombinieren des Cholinsalzes mit einem Zuckeralkohol oder einem Hexitzucker-Derivat oder einem Alginat, um eine Zusammensetzung zu bilden,
wobei die Zusammensetzung mehr als 90 Gew.-% des Cholinsalzes umfasst, weniger als 1 Gew.-% Wasser enthält und frei fließend ist, wobei das Hexitzucker-Derivat ausgewählt ist aus der Gruppe, bestehend aus 1,4-Anhydrosorbit, 1,5-Anhydrosorbit, 3,6-Anhydrosorbit, 2,5-Anhydromannit, Isosorbid (1,4:3,6-Dianhydrosorbit), Isomannid (1,4:3,6-Dianhydromannit), Isoidid (1,4:3,6-Dianhydroidit) und Kombinationen derselben, wobei die Menge an Zuckeralkohol in der Zusammensetzung geringer ist als 5,0 Gew.-%, wobei die Menge an Hexitzucker-Derivat in der Zusammensetzung geringer ist als 5,0 Gew.-% und wobei die Menge an Alginat in der Zusammensetzung geringer ist als 5,0 Gew.-%.

12. Verfahren nach Anspruch 11, wobei die Bestandteile kombiniert werden durch Sprühtrocknen, Rotationsvakuummischen oder Trockenmischen.

13. Verfahren nach Anspruch 11 oder Anspruch 12, weiter umfassend Kombinieren eines Phosphatsalzes mit der Zusammensetzung.

14. Verfahren nach Anspruch 13, wobei das Cholinsalz und der Zuckeralkohol durch Sprühtrocknen kombiniert werden und das Phosphatsalz durch Trockenmischen kombiniert wird.

## Revendications

1. Composition comprenant : (i) plus de 90 % en poids d'un sel de choline ; (ii) un alcool de sucre ou un dérivé de sucre hexitol, ou un alginate; (iii) moins de 1 % en poids d'eau ; et (iv) optionnellement un phosphate sel, la composition s'écoulant librement,
dans laquelle le dérivé de sucre hexitol est sélectionné dans le groupe constitué de 1,4-anhydrosorbitol, 1,5-anhydrosorbitol, 3,6-anhydrosorbitol, 2,5-anhydromannitol, isosorbide (1,4:3,6-dianhydrosorbitol), isomannide (1,4:3,6-dianhydromannitol), isoidide (1,4:3,6-dianhydroiditol) et des combinaisons de ceux-ci,
dans laquelle la quantité d'alcool de sucre dans la composition est inférieure à 5,0 % en poids, dans laquelle la quantité de dérivé de sucre hexitol dans la composition est inférieure à 5,0 % en poids, et dans laquelle la quantité d'alginate dans la composition est inférieure à 5,0 % en poids.

2. Composition selon la revendication 1, la composition comprenant plus d'environ 95 % en poids de sel de choline.

3. Composition selon la revendication 1 ou la revendication 2, dans laquelle le sel de choline est sélectionné dans le groupe constitué de : chlorure de choline, bitartrate de choline, hydroxyde de choline, citrate de choline et carbonate de choline.

4. Composition selon la revendication 1, dans laquelle l'alcool de sucre est sélectionné dans le groupe constitué d'un hexitol, d'un tétritol, d'un pentitol et de combinaisons de ceux-ci.

5. Composition selon la revendication 1, dans laquelle (a) l'alcool de sucre est un sucre hexitol et est sélectionné dans le groupe constitué de mannitol, sorbitol et inositol ; (b) l'alcool de sucre est un sucre tétritol et est sélectionné dans le groupe constitué de thréitol et érythritol ; ou (c) l'alcool de sucre est un sucre pentitol et est le xylitol.

6. Composition selon la revendication 1, la composition comprenant moins de 0,5 % en poids d'eau.

7. Composition selon la revendication 1, dans laquelle le sel de choline et l'alcool de sucre sont séchés ensemble par atomisation.

8. Composition selon la revendication 1, comprenant : (i) 98,75 à 99,75 % en poids de chlorure de choline ; (ii) 0,25 à 1,25 % en poids de mannitol ; et (iii) moins de 1 % d'eau, la composition s'écoulant librement.

9. Composition selon la revendication 1, dans laquelle :
la teneur en phosphate sel est inférieure à 5 % en poids ;
le phosphate sel est le phosphate dibasique de calcium ;
le sel de choline et l'alcool de sucre sont séchés ensemble par atomisation et le phosphate sel est mélangé à sec avec le sel de choline et l'alcool de sucre séchés par atomisation ; ou
la composition comprend (i) 97,5 à 99,5 % en poids de chlorure de choline ; (ii) 0,25 à 1,25 % en poids de mannitol ; (iii) 0,25 à 1,25 % en poids de phosphate dibasique de calcium ; et (iv) moins de 1 % d'eau, la composition s'écoulant librement.

10. Composition selon la revendication 1, dans laquelle l'alginate est l'alginate de sodium.

11. Procédé comprenant (i) la fourniture d'un sel de choline ; (ii) la combinaison du sel de choline avec un alcool de sucre ou un dérivé de sucre hexitol, ou d'un alginate pour former une composition, dans lequel la composition comprend plus de 90 % en poids du sel de choline, contient moins de 1 % en poids d'eau et s'écoule librement,
dans lequel le dérivé de sucre hexitol est sélectionné dans le groupe constitué de : 1,4-anhydrosorbitol, 1,5-anhydrosorbitol, 3,6-anhydrosorbitol, 2,5-anhydromannitol, isosorbide (1,4:3,6-dianhydrosorbitol), isomannide (1,4:3,6-dianhydromannitol), isoidide (1,4:3,6-dianhydroiditol) et des combinaisons de ceux-ci, dans lequel la quantité d'alcool de sucre dans la composition est inférieure à 5,0 % en poids, dans lequel la quantité de dérivé de sucre hexitol dans la composition est inférieure à 5,0 % en poids et dans lequel la quantité d'alginate dans la composition est inférieure à 5,0 % en poids.

12. Procédé selon la revendication 11, dans lequel les composants sont combinés par séchage par atomisation, rotation sous vide ou mélange à sec.

13. Procédé selon la revendication 11 ou la revendication 12, comprenant en outre la combinaison d'un phosphate sel à la composition.

14. Procédé selon la revendication 13, dans lequel le sel de choline et l'alcool de sucre sont combinés par séchage par atomisation et le phosphate sel est combiné par mélange à sec.
